# EUROPÄISCHE PATENTSCHRIFT

(11) **EP 2 949 608 B1**
(45) Veröffentlichungstag und Bekanntmachung des Hinweises auf die Patenterteilung: **13.06.2018**
(21) Anmeldenummer: 15164394.7
(22) Anmeldetag: 21.04.2015
(51) Int. Cl.: B65G 47/86, B67C 3/24

(54) **GREIFARM FÜR BEHÄLTER, GREIFEINRICHTUNG AND TRANSPORTVORRICHTUNG**
GRIPPING ARM FOR CONTAINER, GRIPPING DEVICE AND TRANSPORTATION DEVICE
BRAS DE PRÉHENSION POUR RÉCIPIENT, DISPOSITIF PRÉHENSEUR ET DISPOSITIF DE TRANSPORT

(30) Priorität: 28.05.2014 DE 102014107538
(43) Veröffentlichungstag der Anmeldung: 02.12.2015
(73) Patentinhaber: Tyrolon-Schulnig GmbH, 6395 Hochfilzen (AT)
(72) Erfinder: Schulnig, Elmar, 6391 Fieberbrunn (AT)
(74) Vertreter: Rupprecht, Kay

(56) Entgegenhaltungen:
- EP-A1- 2 159 172
- EP-A1- 2 360 109
- EP-A2- 0 795 500
- EP-A2- 2 511 205
- WO-A1-2010/048765
- WO-A1-2012/069109
- DE-A1-102005 014 838
- DE-A1-102005 041 929
- DE-U1- 20 305 988
- DE-U1- 29 514 099
- DE-U1-202005 002 924
- US-A- 5 607 045
- US-A1- 2006 042 911

## Beschreibung

Die vorliegende Erfindung betrifft eine Greifeinrichtung zum Greifen, Halten und/oder Führen von insbesondere kleinen und im Wesentlichen rund geformten Behältern, sowie eine Transportvorrichtung.

Greifeinrichtungen zum Greifen, Halten und/oder Führen von insbesondere kleinen und im Wesentlichen rund geformten Behältern sind bereits aus dem Stand der Technik bekannt und werden bei der fließbandtechnischen Bearbeitung von Behältern verwendet.

Unter dem Begriff "Behälter" sind im Zusammenhang mit der vorliegenden Erfindung insbesondere, aber nicht ausschließlich kleine Behälter mit einem im Wesentlichen kreisförmigen Querschnitt zu verstehen, z. B. Fläschchen oder Dosen oder Gläschen, die jeweils den Gepflogenheiten entsprechend aus Glas, Metall oder Kunststoff bestehen können. Unter dem Begriff "im Wesentlichen rund geformt" sind im Zusammenhang mit der vorliegenden Erfindung nicht ausschließlich im geometrischen Sinne rund geformte Behälter zu verstehen, sondern beispielsweise auch ovale, regelmäßig vieleckige, usw., welche dann insbesondere einen im Wesentlichen kreisförmigen, beispielsweise aber auch ovalen oder vieleckigen Querschnitt aufweisen.

Beim Reinigen, Befüllen oder Verschließen werden die Behälter bei einer Eingangsstation mittels einer Greifeinrichtung mit mindestens einem Greifarmpaar gegriffen und zur nächsten Station im Bearbeitungsprozess transportiert. Eine solche Greifeinrichtung für ein Behältertransportsystem besitzt wenigstens zwei Greifarme und kann zwischen einer Greifstellung und einer Öffnungsstellung wechseln. Um einen Behälter zu transportieren, greifen die Greifarme normalerweise unterhalb des Halskragens oder - bei Fläschchen - um den Bauch des Behälters. Ein Steuernocken fungiert hierfür als Öffnungsmittel und eine Spiralfeder als Schließmittel der Greifeinrichtung. Die Federkraft der Spiralfeder dient dabei nicht nur dem Schließen der Greifeinrichtung, sondern auch dem kraftschlüssigen Halten des Behälters. Daher ist die Federkraft entsprechend groß.
Wenn die Greifeinrichtung durch den Steuernocken geöffnet wird, wird eine Kraft gegen eine Greifarminnenseite des Greifarms entgegen der Federkraft aufgewendet. Allerdings werden durch die zusätzlichen Komponenten des Greifarms die Komplexität und somit der Herstellungs-, Wartungs- und Reinigungsaufwand einer Greifeinrichtung erhöht. Der sich auf den Greifarmpaaren sammelnde Schmutz befindet sich insbesondere in Vertiefungen und zwischen den Komponenten und ist bei hygienesensitiven Vorgängen wie dem Abfüllen von Medikamenten oder Hygienemitteln nachteilig. Außerdem ist eine Verkleinerung des Greifarms, die beim Führen und Halten von kleinen Fläschchen bevorzugt ist, wegen der Spiralfeder nicht ohne weiteres möglich. Die zusätzlichen Komponenten verhindern somit eine Miniaturisierung der Greifeinrichtung.
Daher bringt der Betrieb einer aus dem Stand der Technik bekannten Greifeinrichtung einen erhöhten Herstellungs-, Wartungs- und Reinigungsaufwand mit sich, was sich insbesondere beim Einsatz in Bereichen wie dem industriellen Abfüllen von Medikamenten oder Hygienemitteln als nachteilig erweist. Zum anderen ist die Verkleinerung des Greifarms für das Halten von zum Beispiel Medikamentenfläschchen nicht ohne weiteres möglich. WO 2012/069109 offenbart eine Greifeinrichtung nach dem Oberbegriff des Anspruchs 1. WO 2012/069109 A1 beschreibt eine PET Flaschenhaltevorrichtung mit einem Greifarmpaar aus zwei gegengleich geformten Greifarmen. Die Greifarme weisen jeweils einen Greifabschnitt mit einem Greifbogen, zwei Schließmittel aus Magneten und eine Lagerbohrung auf. Die Greifarme sind mittels Lagerachsen schwenkbar gelagert. Ein Schließmittel sind zwischen Lagerbohrung und Greifabschnitt und das andere Schließmittel zwischen Lagerbohrung und Endabschnitt des Greifarms angeordnet.

Es ist daher die Aufgabe der vorliegenden Erfindung, eine Greifeinrichtung und eine Transportvorrichtung der eingangs genannten Art in vorteilhafter Weise weiterzubilden, insbesondere dahingehend, dass eine Miniaturisierung des Greifarms ermöglicht und das Anhaften von Verschmutzungen vermindert wird sowie die Greifeinrichtung wartungsarm und der Schließmechanismus der Greifeinrichtung platzsparend und effizient gestallt ist.

Diese Aufgabe wird erfindungsgemäß durch eine Greifeinrichtung mit den Merkmalen des Anspruchs 1 gelöst.

Die erfindungsgemäße Greifeinrichtung zum Greifen, Halten und Führen von insbesondere flaschenartigen Behältern, mit wenigstens einem Greifarmpaar aus einem ersten Greifarm sowie einem gegengleich ausgebildeten, zweiten Greifarm, wenigstens einem drehbar gelagerten Steuernocken zum Bewegen von Greifabschnitten des Greifarmpaars von einer Greifstellung in eine Öffnungsstellung, wenigstens einer Lagereinheit zum Lagern des Greifarmpaars, wobei die Lagereinheit mindestens einen ersten und zweiten Lagerbolzen zum schwenkbaren Befestigen des ersten und zweiten Greifarms aufweist, und mit wenigstens einem ersten und einem zweiten Schließmittel zum Bewegen der Greifabschnitte des Greifarmpaars von einer Öffnungsstellung in eine Greifstellung ausgebilidet, wobei das erste und zweite Schließmittel jeweils in dem ersten und zweiten Greifarm angeordnet sind.

Der Greifarm der erfindungsgemäßen Greifeinrichtung zum Greifen, Halten und Führen von insbesondere flaschenartigen Behältern weist zum Bewegen eines Greifabschnitts des Greifarms von einer Greifstellung in eine Öffnungsstellung einen drehbar gelagerten Steuernocken auf. Des Weiteren ist der Greifarm mit einer Bohrung zur Lagerung eines Lagerbolzens zum schwenkbaren Befestigen des Greifarms in der Greifeinrichtung, mit einer ersten Aufnahme für ein erstes Schließmittel zum Bewegen des Greifabschnitts des Greifarms von der Öffnungsstellung in die Greifstellung, und mit einer zweiten Aufnahme für ein zweites Schließmittel zum Bewegen des Greifabschnitts des Greifarms von der Öffnungsstellung in die Greifstellung ausgebildet, wobei der Greifabschnitt zumindest teilweise gabelartig geformt sein kann und mindestens zwei Greiffinger aufweist, die derart beschaffen und ausgebildet sind, in der Greifstellung zum Halten eines Behälters zu dienen.

So weist der Greifarm der erfindungsgemäßen Greifeinrichtung zwischen der Bohrung und dem Greifabschnitt wenigstens ein erstes Loch als die erste Aufnahme und zwischen Bohrung und dem Greifabschnitt gegenüberliegenden Ende des Greifarms wenigstens ein zweites Loch als die zweite Aufnahme auf, in welche jeweils das erste und das zweite Schließmittel beim Zusammenbau des Greifarms einsetzbar sind. Der Vorteil der Ausführung als Loch liegt in der einfachen Konstruktion der Aufnahme. Im Vergleich zu Aufnahmen aus z.B. Ösen, Wellen oder Haken ist das Loch auch einfacher zu reinigen. Das erste Loch kann als Bohrung oder als Sackloch, insbesondere als zylinderförmiger Hohlraum, ausgebildet sein. Das bedeutet, dass das Sackloch die Aufnahme des ersten Schließmittels nur von einer Seite des Greifarms zulässt. Zusätzlich kann das erste Schließmittel durch einen Formschluss im ersten Loch gehalten und befestigt werden. Somit bietet das Loch ebenfalls eine einfache Einbau- und Ausbaumöglichkeit für das Schließmittel. Die zuvor genannten Merkmale und Vorteile gelten entsprechend für das zweite Loch. Wie zuvor auch erwähnt, sind zwei Schließmittel auf Grund der höheren Kraft besser als nur ein Schließmittel.

Des Weiteren sind das erste und das zweite Schließmittel jeweils als ein Magnet eines sich anziehenden bzw. abstoßenden Magnetpaares ausgebildet. Ein Magnet bietet im Vergleich zu Schließmitteln wie z.B. einer Feder kaum Möglichkeiten, Verschmutzungen wie Staub, Dreck, Flüssigkeiten oder Fette anzusammeln. Dieser Vorteil liegt insbesondere an der homogenen Oberflächenstruktur des Magnets, die im Gegensatz zu einer Feder keine oder kaum Vertiefungen oder Spalten aufweist, sowie an seiner geringen Anzahl an beweglichen Elementen. Das erste Schließmittel ist Teil des sich anziehenden Magnetpaars, während das zweite Schließmittel Teil des sich abstoßenden Magnetpaars ist. Die Befestigung der Magnete als Schließmittel ist relativ aufwändig, wenn sie mittels Verschweißung oder Verschraubung erfolgt. Einerseits entsteht bei der Verschweißung Hitze, die die Magnetstärke erheblich schwächt, während andererseits die Verschraubung Verschmutzungen anzieht. Das wenigstens eine Sackloch kann demgegenüber so dimensioniert sein, dass es den wenigstens einen Magneten ohne weitere Befestigungsmittel, insbesondere durch Formschluss, sicher hält. Allerdings kann das wenigstens eine Sackloch auch einen überstehenden Rand oder eine an der Innenseite des Sacklochs angeordnete, mit einer Kerbe des Magneten zusammenwirkende Ausbuchtung aufweisen, wodurch der Magnet arretiert und am Herausfallen gehindert wird.

Der Greifarm bietet zunächst den Vorteil, dass eine Miniaturisierung eines Greifarms für eine Greifeinrichtung ermöglicht wird und dass insbesondere das Entstehen von Verschmutzungen vermindert und die Greifeinrichtung insbesondere wartungsarm ist. Denn die Ausgestaltung des Greifarms ermöglicht es, auf die bislang verwendeten, Schmutz und Staub ansammelnden Spiralfedern verzichten zu können, so dass eine Miniaturisierung ermöglicht wird. Der einfache Aufbau des Greifarms erlaubt es ferner, dass das Entstehen von Verschmutzungen insbesondere im Betrieb der Vorrichtung vermindert und die Greifeinrichtung erst nach längeren Zeiträumen gereinigt werden muss und daher wartungsarm ist.

Des Weiteren bietet der Greifarm den Vorteil, dass Vertiefungen, in denen sich vorzugsweise Schmutz, Staub und/oder andere Verschmutzungen sammeln, von den zu greifenden Behältern abgewandt sind. Hierdurch ergibt sich eine Greifeinrichtung, die höchsten Hygieneanforderungen gerecht wird, weil die Greifeinrichtung mit Greifarmen versehen sein kann, die keinen bzw. wenig Schmutz anziehen bzw. nicht zur Verschmutzung an prozessrelevanten Stellen neigen. Damit einher ergeht eine erhebliche Reduzierung der Reinigungsarbeiten, da der Greifarm mit weniger Komponenten konzipiert ist. Im Ergebnis werden die Ansatzflächen für Keime und Verschmutzungen wie z.B. Oberflächenvertiefungen erheblich reduziert.

Schließlich ist als Vorteil des Greifarms zu nennen, dass, statt nur einem, zwei Schließmittel zum Schließen der Greifeinrichtung verwendet und somit eine viel größere Haltekraft auf die zu transportierenden Behälter aufgewendet werden kann. Dadurch können schwere, gefüllte und unhandliche Behälter, die z.B. keine Rillen oder Vertiefungen zum besseren Greifen aufweisen, stabil und sicher gehalten werden.

Die erfindungsgemäße Greifeinrichtung, die den Greifarm umfasst, ist insbesondere Teil einer Transportvorrichtung, die im Zusammenhang mit dem Reinigen, Befüllen oder Verschließen von Behältern den Behälter greifen und zur nächsten Station im Prozess transportieren.

Vorteilhafte Weiterbildungen der Erfindung sind in den Unteransprüchen angegeben. Dabei ist festzuhalten, dass die verschiedenen Ausführungsformen und insbesondere deren Merkmale jeweils miteinander kombinierbar sind.

In einer weiteren vorteilhaften Ausführungsform der Greifeinrichtung sind wenigstens zwei Greiffinger des Greifabschnitts parallel und/oder äquidistant zueinander angeordnet. Durch die parallele Anordnung können die Greiffinger beim Halten die gleiche Kraft auf den Behälter ausüben. Insbesondere rotationssymmetrische Behälter, die von einem Transportband gegriffen werden, können durch eine Greifeinrichtung mit derartig ausgebildeten Greiffingern eines Greifarms in jeder Drehungsposition des Behälters um seine Rotationsachse sicher und stabil gegriffen werden. Durch die äquidistante Anordnung der wenigstens zwei Greiffinger ist eine gleichmäßige Kraftverteilung auf dem Behälter möglich. Des Weiteren können zwei sich gegenüberliegende Greifeinrichtungen zum Übergeben eines Behälters derart vertikal zueinander versetzt sein, dass die Greiffinger des einen Greifarms in die Abstände zwischen den Greiffingern des anderen Greifarms und umgekehrt greifen können. Zusätzlich oder alternativ kann auch die Breite des Greiffingers kleiner als der Abstand zwischen den Greiffingern sein, um ein Ineinandergreifen ohne ein Berühren der Greiffinger der gegenseitigen Greifvorrichtungen zu ermöglichen.

Ebenso ist der Greifarm vorzugsweise einstückig aus Kunststoff, insbesondere aus faserverstärktem Polyetheretherketon (PEEK), gefertigt. Herkömmliche Greifarme bestehen aus Edelstahl und sind deshalb relativ teuer, wobei sich darüber hinaus im Betrieb der in Rede stehenden Greifeinrichtungen gezeigt hat, dass sich die metallischen Greifarme gelegentlich verbiegen, was zum einen beim Betrieb der Greifeinrichtung schwer erkennbar ist und zum anderen zu Beschädigungen der zu greifenden und transportierenden Behälter und/oder der gegenüberliegenden Greifarme, welche den Behälter übergeben bzw. übernehmen, und/oder anderer Armaturen führen kann. Werden die Greifarme hingegen aus Kunststoff gefertigt, lassen sie sich sehr günstig als Wegwerfartikel im Spritzgussverfahren herstellen. Des Weiteren weist Kunststoff für diesen Einsatz bessere Eigenschaften gegenüber Edelstahl auf, so dass eine Überbeanspruchung des Greifarms nicht zum Verbiegen, sondern zum sofortigen Bruch führt, was keine Folgebeschädigung der Flasche nach sich zieht und ein sofortiges Erkennen des überbeanspruchten Greifarms ermöglicht. Dann kann der Greifarm aufgrund seiner einstückigen Ausbildung sehr rasch und kostengünstig ersetzt werden. Als vorteilhafter Kunststoff hat sich faserverstärktes Polyetheretherketon erwiesen, da es eine gute Steifigkeit bei gleichzeitiger ausreichender Biegsamkeit aufweist. PEEK ist ein hochtemperaturbeständiger thermoplastischer Kunststoff und die Faserverstärkung ermöglicht einen Faser-Kunststoff-Verbund aus hoher spezifischer Steifigkeit und Festigkeit. Kunststoff zeigt im Gegensatz zu herkömmlich verwendeten Metall bzw.

Edelstahl kaum Verschleißerscheinungen bei der Reinigung mit Wasser. Durch einen durch Kunststoff geformten Greifarm entsteht ein leicht austauschbares Produkt, das nach seiner Abnutzung ohne Probleme entfernt und ohne große Kosten oder Lieferzeiten ersetzt werden kann.

Der Erfindung gereicht es in einer vorteilhaften Ausführungsform ebenfalls zum Vorteil, dass der Greifarm zwischen der Bohrung und der ersten Aufnahme eine an einer Greifarminnenseite angeordnete dritte Aufnahme zum rotierbaren Befestigen eines Abrollelements aufweist, der mit dem Steuernocken beim Überführen von der Greifstellung in die Öffnungsstellung und umgekehrt zusammenwirkt. Das Abrollelement hat den Vorteil, dass bei der Einwirkung des Steuernockens auf den Greifarm der Greifarm selbst nicht berührt wird und somit kein Materialabrieb erfolgt. Dieser Vorteil schont den Greifarm und macht ihn weniger reparaturanfällig bzw. der Greifarm muss weniger oft ausgetauscht werden. Das Abrollelement ist rotationssymmetrisch, z.B. in Form eines Zylinders, und kann aus Kunststoff gebildet sein. Auf Grund der Tatsache, dass das Abrollelement auf einer Achse in der dritten Aufnahme rotierbar befestigt ist, kann das Abrollelement beim Zusammenwirken mit dem Steuernocken rotieren und es kommt nicht zu einer einseitigen Abnutzung. Die dritte Aufnahme kann zusätzlich eine Ausbuchtung aufweisen, die durch eine Materialerstreckung, insbesondere eine Ausbeulung bzw. Ausbuchtung in Richtung des Steuernockens, sowohl vom Rand der Greifarmoberseite als auch vom Rand der Greifarmunterseite gebildet wird. Mittels der Ausbuchtung wird das Positionieren des Abrollelements zwischen den beiden Materialerstreckungen näher zum Steuernocken ermöglicht und der Durchmesser des Steuernockens kann im Vergleich zum Stand der Technik kleiner bzw. gleich groß ausgebildet sein. Bei kleinerem Durchmesser des Steuernockens verringert sich der Hebelarm des Steuernockens am Greifarm. Damit ist auch weniger Kraft für das Öffnen der Greifeinrichtung notwendig und weniger Materialabrieb des Abrollelements absehbar.

Ferner weist der Greifarm vorteilhafterweise wenigstens einen Verzahnungsabschnitt mit zumindest segmentweise koaxial um die wenigstens eine Bohrung an der Greifarminnenseite angeordneten Zähnen zum synchronen Schwenken des Greifarms mit einem gegengleich ausgebildeten Greifarm der Greifeinrichtung auf. Dadurch wird die Bewegung der Greifabschnitte der jeweiligen Greifarme von der Öffnungsstellung in die Greifstellung als auch umgekehrt von den Greifarmen gleichmäßig und synchron ausgeführt und die Auslenkung der beiden Greifarme erfolgt durch die Schwenkung spiegelbildlich. Dabei greifen die Zähne der beiden Verzahnungsabschnitte des Greifarmpaares ineinander. Je kürzer die Zähne sind, desto näher können sich die Greifarme eines Greifarmpaars gegenüberliegen, damit die Zähne ineinandergreifen können. Obwohl der eine Greifarm sowie dessen gegengleich ausgebildeter Greifarm, insbesondere alle ihre Komponenten bzw. Formen, Abschnitte oder Teile, spiegelsymmetrisch zueinander geformt sind, ist der Verzahnungsabschnitt des einen Greifarms in der Regel nicht gegengleich zum Verzahnungsabschnitt des anderen Greifarms. Stattdessen sind sie derart zueinander angeordnet und/oder am Greifarm ausgebildet, z.B. durch Versatz des einen Verzahnungsabschnitts in einem bestimmten Winkel gegenüber dem anderen Abschnitt, dass ein Ineinandergreifen der Zähne und somit eine gespiegelte Bewegung der beiden Greifarme in der Greifeinrichtung möglich ist.

Die erfindungsgemäße Greifeinrichtung bietet zunächst den Vorteil, dass für ihre Funktionalität nur eine kleine Anzahl von Komponenten notwendig ist. Dadurch werden Ausfälle und Reparaturen verringert und die Lebensdauer der Greifeinrichtung erhöht. Außerdem ist auf Grund der geringeren Anzahl an Komponenten die Zusammensetzung und Montage einfacher und es kann sich wegen der geringen Anzahl an Verbindungsstellen zwischen den Komponenten weniger Schmutz in Spalten ansammeln. Dadurch wird auch eine Reinigung der Greifeinrichtung sowohl im zusammengesetzten als auch im zerlegten Zustand einfacher und bedarf eines geringeren Aufwands.

Vorteilhafterweise sind der erste und zweite Greifarm des Greifarmpaars auf den ersten und zweiten Lagerbolzen aufsteckbar. Daraus ergibt sich der Vorteil, die Greifeinrichtung einfacher zusammenzusetzen, auseinanderzunehmen und zu reparieren. Insbesondere der Austausch defekter Greifarme kann somit schneller durchgeführt werden. Während der untere Teil der Lagerbolzen in der Lagereinheit befestigt sein kann, liegt der obere Teil der Lagerbolzen frei, so dass die Greifarme aufsteckbar sind. Dabei ist der Lagerbolzen durch die Bohrung des Greifarms führbar. Da die Lagerbolzen von der Lagereinheit nach oben gerichtet sein können, erhält ein Techniker einen besseren Zugang zu der Greifeinrichtung, wenn diese montiert, demontiert oder repariert wird. Die Lagerbolzen sind vorzugsweise zylinderförmig und aus Metall, insbesondere aus Stahl, geformt.

Des Weiteren ist zwischen dem ersten und zweiten Greifarm des Greifarmpaars vorteilhafterweise der wenigstens eine Steuernocken angeordnet und/oder in die Lagereinheit einsteckbar. Der Vorteil liegt darin, dass der Steuernocken genau so wie die aufsteckbaren Greifarme einfach und unproblematisch montiert oder repariert werden kann. Mit der Anordnung des Steuernockens zwischen den Greifarmen ist der Steuernocken besser vor Schäden durch Außeneinwirkungen wie z.B. Stöße bzw. Schläge von fremden Objekten geschützt. Insbesondere dient der Steuernocken als Öffnungsmittel der Greifeinrichtung und wird in der Regel beim Halten eines Behälters nicht mit dem Greifarm zusammenwirken; schließlich wird die durch die Schließmittel erzeugte Haltekraft vollständig auf den Behälter angewendet. Der Steuernocken muss daher nicht bei jeder neuen Form eines zu haltenden Behälters ausgetauscht, angepasst oder justiert werden.

In einer weiteren vorteilhaften Ausführungsform weist der wenigstens eine Steuernocken ein Betätigungselement auf, das im Lagerzustand des Steuernockens oberhalb des Greifarmpaars oder unterhalb der Lagereinheit angeordnet ist. Der Vorteil eines oberhalb des Greifarmpaars angeordneten Betätigungselements ist dessen einfache Prüfung und Justierung, da ein Techniker einen guten Zugang zum oberen Bereich der Greifeinrichtung hat. Außerdem lässt sich der Steuernocken mit Betätigungselement in einem Stück aus der Lagereinheit herausziehen. Der Vorteil eines unterhalb der Lagereinheit angeordneten Betätigungselements ist der einfache Austausch der Greifarme; schließlich ist der Steuernocken zwischen (und nicht oberhalb von) den Greifarmen angeordnet und kein Element bzw. Teil des Steuernockens behindert das Abstecken der Greifarme von den Lagerbolzen. Somit muss der Steuernocken und das Betätigungselement beim Abstecken der Greifarme nicht mehr demontiert werden.

Die Erfindung bezieht sich des Weiteren auf eine Transportvorrichtung zum Transportieren von Behältern gemäß Anspruch 9 mit einem oder mehreren erfindungsgemäßen Greifeinrichtungen.

Die erfindungsgemäße Transportvorrichtung bietet den Vorteil, zum Halten, Greifen und Transportieren von Behältern geeignet zu sein. Vorzugsweise ist die Transportvorrichtung um eine Achse rotierbar. Sie kann aber auch ein Band mit darauf befestigten Greifeinrichtungen aufweisen, wobei das Band auch aus Segmenten, z.B. aus Metall oder Kunststoff, aufgebaut sein kann.

Vorteilhafterweise umfasst die Transportvorrichtung eine ringförmige Trägerplatte, die derart ausgebildet ist, dass ein Positionieren und Befestigen der einen oder mehreren Greifeinrichtungen auf der Trägerplatte möglich ist. Die Trägerplatte stellt sicher, dass die Greifeinrichtungen in vorbestimmten Positionen, insbesondere im gleichen Abstand zueinander und radial um den Mittelpunkt der Trägerplatte, angeordnet und befestigt werden können, ohne dass eine manuelle Positionierung der Greifeinrichtungen notwendig ist. Des Weiteren bildet die Trägerplatte mit den Greifeinrichtungen ein Modul, das als Ganzes ausgetauscht werden kann, um eine größere oder kleinere Trägerplatte mit einer größeren, gleichen oder kleineren Anzahl an Greifeinrichtungen bereitzustellen. Außerdem können die Greifeinrichtungen größer, gleich oder kleiner dimensioniert sein, um geänderten Betriebssituationen, wie z.B. größere Behälter, langsamere Tangentialgeschwindigkeit und/oder eine veränderte Transportbandinfrastruktur, Rechnung zu tragen. Ein weiterer Vorteil liegt darin, dass die Trägerplatte mit den darauf befestigten Greifeinrichtungen als Ganzes austauschbar ist.

Ebenso ist die Transportvorrichtung vorzugsweise mit einem Sicherungselement zum Sichern des ersten und zweiten Greifarms auf den ersten und zweiten Lagerbolzen ausgebildet. Mittels des Sicherungselements wird der Vorteil erzielt, dass ein Lösen oder Verschieben der vorzugsweise aufsteckbaren Greifarme von bzw. entlang den Lagerbolzen verhindert werden kann. Dadurch bleibt die Greifstellung konstant und ein stabiles Greifen und Halten wird sichergestellt. Vorzugsweise ist das Sicherungselement derart z.B. als Scheibe oder Ring ausgebildet, dass die Greifarme aller Greifeinrichtungen gleichzeitig gesichert werden können.

Die Transportvorrichtung kann zusätzlich eine Reinigungsmittelzufuhr aufweisen, die sich von einem nicht beweglichen Teil der Transportvorrichtung erstreckt und auf die vorbeigeführten Greifeinrichtungen gerichtet ist. Somit kann bei einer Umdrehung der Transportvorrichtung die Reinigungsmittelzufuhr aktiviert werden und jede Greifeinrichtung beim Passieren der Reinigungsmittelzufuhr mit einem Reinigungsmittel automatisch besprüht werden. Zusätzlich kann eine nachfolgende, vorzugsweise wie die Reinigungsmittelzufuhr befestigte Trocknungsanlage an der Transportvorrichtung ausgebildet sein, die z.B. mittels heißer Luft die Greifeinrichtungen von überschüssiger Flüssigkeit befreien und trocknen kann. Handelt es sich bei der Verschmutzung hauptsächlich um Staub, könnte statt einer Flüssigkeit auch Druckluft auf die Greifeinrichtung geblasen werden, um den Staub zu entfernen.

Die vorliegende Erfindung beschreibt auch als Beispiel ein Verfahren zum Herstellen eines Greifarms, der mittels eines Spritzgussverfahrens hergestellt wird. Das Spritzgussverfahren hat den Vorteil, dass ein Greifarm günstig und schnell hergestellt werden kann. Die vorzugsweise im Verfahren verwendeten Spritzgussformen stellen auch eine Form- und Struktur-identische Herstellung der Greifarme sicher.

Weitere Einzelheiten und Vorteile der Erfindung sollen nun anhand eines in der Zeichnung dargestellten Ausführungsbeispiels näher erläutert werden.

Es zeigen:
- Fig. 1: eine Seitenansicht auf die Greifarminnenseite eines Greifarms;
- Fig. 2: eine Ansicht auf die Greifarmoberseite des Greifarms;
- Fig. 3: eine perspektivische Ansicht des Greifarms;
- Fig. 4: einen Querschnitt einer erfindungsgemäßen Greifeinrichtung mit einem unterhalb der Lagereinheit angeordneten Betätigungselements;
- Fig. 5: einen Querschnitt einer erfindungsgemäßen Greifeinrichtung mit einem oberhalb der Greifarme angeordneten Betätigungselements;
- Fig. 6: eine Draufsicht auf die Oberseite der Greifeinrichtung aus Fig. 5;
- Fig. 7: eine perspektivische Ansicht der Greifeinrichtung aus Fig. 5;
- Fig. 8: eine perspektivische Ansicht der Greifeinrichtung aus Fig. 4;
- Fig. 9: eine perspektivische Ansicht der Lagereinheit einer Greifeinrichtung aus Fig. 5 mit einem eingesteckten Steuernocken;
- Fig. 10: eine perspektivische Ansicht der erfindungsgemäßen Transportvorrichtung;
- Fig. 11: eine perspektivische Ansicht der erfindungsgemäßen Transportvorrichtung auf einem Rotationselement; und
- Fig. 12: eine Seitenansicht mit einem partiellen Querschnitt der erfindungsgemäßen Transportvorrichtung auf dem Rotationselement aus Fig. 11.

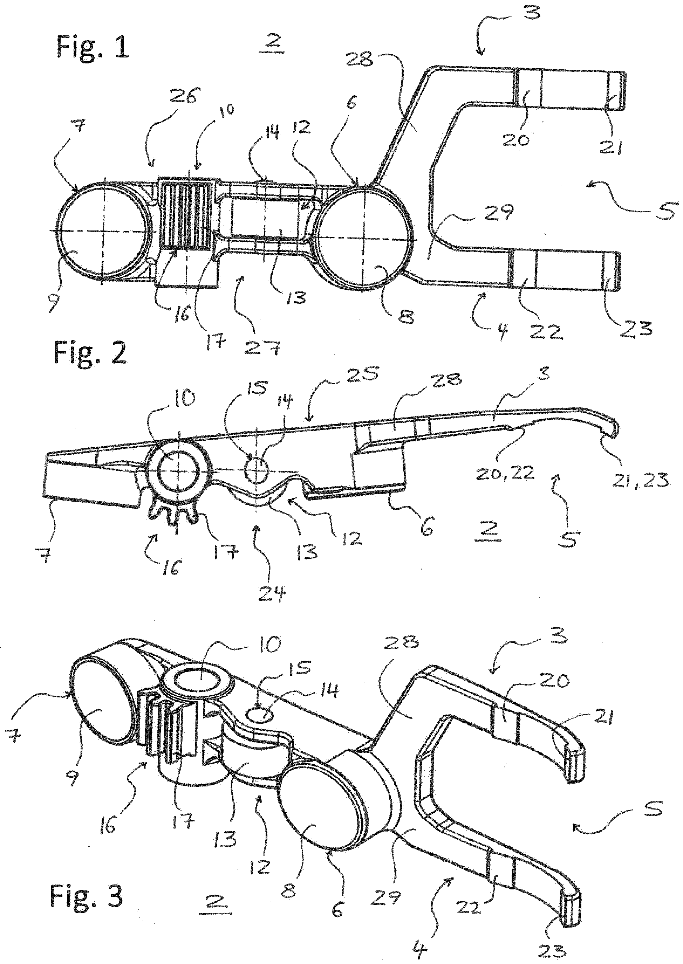

In Figur 1 wird die Greifarminnenseite eines Greifarms 2 für eine - hier nicht dargestellte - Greifeinrichtung zum Greifen, Halten und Führen von insbesondere flaschenartigen Behältern gezeigt. Die Greifeinrichtung weist einen - hier nicht dargestellten - drehbar gelagerten Steuernocken zum Bewegen eines Greifabschnitts 5 des Greifarms 2 von einer Greifstellung in eine Öffnungsstellung auf. Der Greifarm 2 hat eine Bohrung 10 zur Lagerung eines Lagerbolzens zum schwenkbaren Befestigen des Greifarms 2 in der Greifeinrichtung. Ebenso hat der Greifarm 2 eine erste Aufnahme 6 für ein erstes Schließmittel 8 zum Bewegen des Greifabschnitts 5 des Greifarms 2 von der Öffnungsstellung in die Greifstellung und eine zweite Aufnahme 7 für ein zweites Schließmittel 9 zum Bewegen des Greifabschnitts 5 des Greifarms 2 von der Öffnungsstellung in die Greifstellung, wobei der Greifabschnitt 5 zumindest teilweise gabelartig geformt ist und mindestens zwei Greiffinger 3, 4 aufweist, die derart beschaffen und ausgebildet sind, in der Greifstellung zum Halten eines Behälters zu dienen. Die Greiffinger 3, 4 sind parallel zueinander angeordnet und weisen jeweils zwei Greifflächen auf, nämlich die erste 20, 22 sowie die zweite 21, 23. Die Greifflächen sind erhoben und bilden den primären Kontakt zwischen Greiffinger und Behälter in der Greifstellung. Weitere Kontaktpunkte zwischen Behälter und Greiffinger und/oder Behälter und Greifeinrichtung sind möglich. Die erste Greiffläche 21, 23 befindet sich am Ende bzw. an der Spitze des Greiffingers. Die zweite Greiffläche 20, 22 befindet sich beabstandet von der ersten Greiffläche 21, 23. Bezüglich Form und Abstand der Greifflächen sind diese bei den beiden Greiffingern 3, 4 identisch ausgebildet. Der erste Greiffinger 3 ist über ein erstes Flankenelement 28 mit dem Greifarm 2 verbunden, während der zweite Greiffinger 4 über ein zweites Flankenelement 29 verbunden ist. Das erste Flankenelement 28 ist länger als das zweite Flankenelement 29 und ermöglicht zusätzlich, dass der erste Greiffinger 3 höher als die restlichen Elemente und Bereiche des Greifarms 2 positioniert ist. Der Greifabschnitt 5, der die Greiffinger 3, 4 umfasst, ist derart ausgebildet, dass beim Schwenken des Greifarms um einen in der Bohrung 10 gelagerten - hier nicht dargestellten - Lagerbolzen in die Greifstellung alle Kontaktflächen 20, 21, 22, 23 mit dem Behälter vorzugsweise gleichzeitig in Kontakt treten. Außerdem sind die Kontaktflächen 20, 21, 22, 23 derart ausgebildet, dass die beim Greifen des Behälters aufgebrachten Kräfte auf den Behälter in der Summe keine resultierende Kraft erzeugt. Eine mögliche Ausnahme wäre eine zur Greifeinrichtung gerichtete resultierende Kraft, um die auf den Behälter wirkende Zentrifugalkraft beim Transportieren zumindest teilweise zu kompensieren. Die beiden Flankenelemente 28, 29 treffen an der ersten Aufnahme 6 zusammen, die als Sackloch ausgebildet ist. Das Sackloch hat eine zylinderförmige Vertiefung und kann ein als Magnet ausgebildetes erstes Schließmittel 8 aufnehmen und vorzugsweise auf Grund von Formschluss halten. An dem Sackloch nachfolgend ist die dritte Aufnahme 12 angeordnet und wird durch einen Rahmen oder Steg jeweils an der Oberseite 26 und der Unterseite 27 des Greifarms zwischen der ersten Aufnahme 6 und der Bohrung 10 gebildet. Man kann auch sagen, dass der Greifarm 2 ein seitlich angeordnetes Loch, das sich zwischen Greifarminnenseite und Greifarmaußenseite erstrecken kann, aufweist. In der dritten Aufnahme 12 ist ein Abrollelement 13 angeordnet und wird mittels eines parallel zur Bohrung 10 angeordneten Befestigungselements 14 vorzugsweise rotierbar gelagert. Das Befestigungselement 14 kann ein Bolzen oder Stab sein, der in dem Rahmen der Greifarmoberseite 26 und/oder in dem Rahmen der Greifarmunterseite 27 befestigt ist. An die dritte Aufnahme 12 schließt sich die Bohrung 10 an, die aus einem durchgehenden zylindrischen Loch zwischen Greifarmoberseite 26 und Greifarmunterseite 27 gebildet wird. Der Greifarm 2 erstreckt sich im Wesentlichen senkrecht von der Achse der Bohrung 10. Bei der Bohrung 10 ist der Verzahnungsabschnitt 16 angeordnet, der drei Zähne 17 aufweist. Am Greifarmende ist neben der Bohrung 10 die zweite Aufnahme 7 als Sackloch ausgebildet, die eine identische Form und Größe zur ersten Aufnahme 6 hat. Dabei liegen die erste Aufnahme 6 und die zweite Aufnahme 7 auf gleicher Höhe zu einer gedachten Geraden senkrecht zur Achse der Bohrung 10 und grenzen an der Greifarmoberseite 26 an.

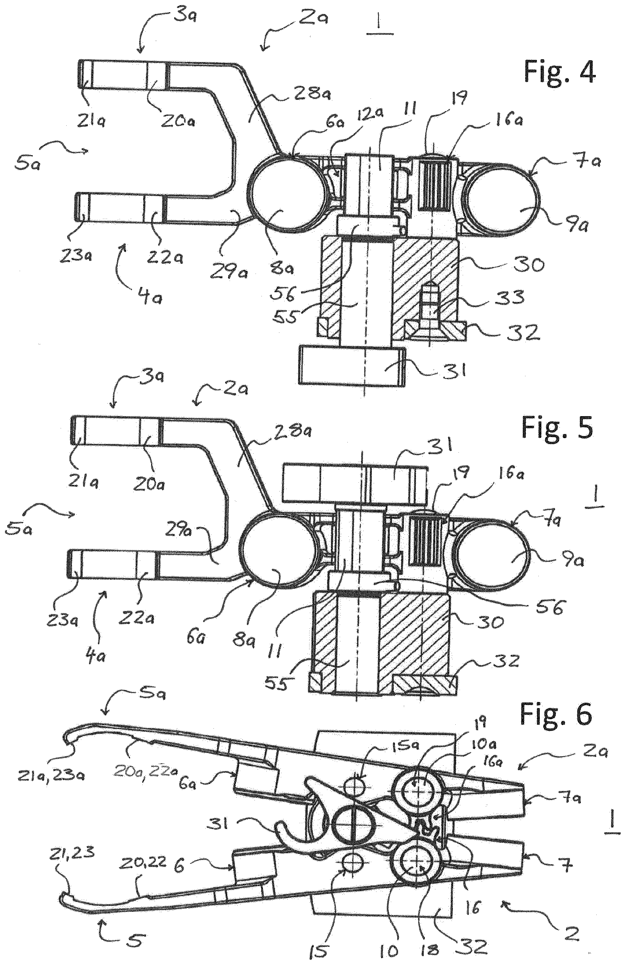

In Figur 2 wird die Greifarmoberseite 26 des Greifarms 2 gezeigt. Wie bereits aus Figur 1 ersichtlich, ist die Oberseite 26 keine durchgehende Ebene, sondern wird aus der Oberseite des ersten Greiffingers 3, der Außenflanke des ersten Flankenelements 28 sowie einer Ebene des restlichen Greifarms 2, die sich von der ersten Aufnahme 6 über die dritte Aufnahme 12, die Bohrung 10 bis zur zweiten Aufnahme 7 erstreckt, gebildet. Auf der Greifarmoberseite 26 sind die Bohrung 10 und eine Befestigungsaufnahme 15 für das Befestigungselement 14 deutlich zu erkennen. Des Weiteren wird die Kontur der Greifarmaußenseite 25 des Greifarms 2 gezeigt, die vom Greifarmende bis zum Ende des Flankenelements 28, 29 eben ist. Lediglich der Greifabschnitt 5 weist teilweise auf der Greifarmaußenseite 25 (und auf der Greifarminnenseite 24) eine leichte Krümmung zur Greifarminnenseite 24 bis zur Spitze des Greiffingers 3 auf. Die Greifarmaußenseite 25 selbst ist ebenfalls bis auf die Greifabschnitt 5 eben. Die Ränder der Sacklöcher 6, 7 bilden jeweils eine Ebene, die nicht parallel, sondern in einem bestimmten Winkel zueinander liegen. Diese beiden Ebenen schneiden sich gedanklich am Ansatz des mittleren Zahns 17 des Verzahnungsabschnitts 16 und bilden dort eine Gerade, die parallel zur Achse der Bohrung 10 ist. Auf Grund der abgewinkelten Anordnung der ersten und zweiten Aufnahme 6, 7 besteht nun genügend Platz zum Schwenken zweier Greifarme 2, 2a in der Greifeinrichtung 1, und das entsprechende Schließmittel 8, 9 des einen Greifarms 2 in der Greifstellung bzw. in der Öffnungsstellung liegt dem entsprechenden Schließmittel des - hier nicht dargestellten - gegengleichen Greifarms 2a (siehe z.B. Figur 4) parallel und sehr dicht gegenüber, wodurch die auf die beiden Schließmittel 8 und 8a bzw. 9 und 9a wirkende Magnetkraft verstärkt wird. Die Greifarminnenseite 24 als auch dessen Kontur werden im Wesentlichen (d.h. nicht ausschließlich) durch die zweite Aufnahme 7, den Verzahnungsabschnitt 16, der dahinterliegenden Außenwand der Bohrung 10, die dritte Aufnahme 12, insbesondere mit dem befestigen Abrollelement 13, der ersten Aufnahme 6 sowie der Innenseite des Greifabschnitts 5 aus den Flankenelementen 28, 29 und den Greiffingern 3, 4 gebildet. Aus der Figur 2 ist auch erkennbar, dass der Umriss des ersten Greiffingers 3 vorzugsweise auf Grund der identischen Anordnung, Form, Länge und Dicke bzw. Größe den zweiten Greiffinger 4 abdeckt.

Figur 3 zeigt eine perspektivische Ansicht des Greifarms 2 aus Figur 1 und 2. Die in Figur 3 beschriebenen Merkmale sind identisch zu den Merkmalen in den Figuren 1 und 2. In dieser Ansicht ist die zylindrische Form der ersten und zweiten Aufnahme 6 und 7 sowie deren Schließmittel 8 und 9, des Abrollelements 13 und die Außenwand, der Ring bzw. der Hohlzylinder der Bohrung 10 gut erkennbar. Bei der dritten Aufnahme 12 verbreitert bzw. verdickt sich der Teil des Rahmens der Greifarmoberseite 26 und der Greifarmunterseite 27 langsam, der mit der Außenwand der Bohrung 10 verbunden ist, um eine Hebelkraft an der Verbindungsstelle besser entlang des Rahmens zu verteilen. Ansonsten würde eine Punktbelastung zu einem relativ schnellen Verbiegen oder sogar Bruch des Greifarms führen. Diese Hebelkraft kann durch das Eigengewicht des Greifarms und zusätzlich durch die Gewichtskraft eines gehaltenen Behälters hervorgerufen werden.

In Figur 4 wird ein Querschnitt einer erfindungsgemäßen Greifeinrichtung 1 mit einem unterhalb der Lagereinheit 30 angeordneten Betätigungselements 31 gezeigt. Die Schnittebene entspricht der Symmetrieebene der beiden Greifarme 2 und 2a und verläuft durch die Lagereinheit 30 und die Drehachse des Steuernockens 11. Die Sicht auf den zweiten Greifarm 2a entspricht der gespiegelten Seitenansicht auf den ersten Greifarm 2 aus Figur 1. Das Betätigungselement 31 ist über ein in der Lagereinheit eingesetztes rotierbares Verlängerungselement 55 mit dem Steuernocken 11 verbunden. Die Lagereinheit 30 ist in einem vorzugsweise nicht rundem Loch der Trägerplatte 32 eingesetzt, damit die Lagereinheit 30 in eine bestimmte Richtung und Position ausgerichtet und befestigt werden kann. Die Lagereinheit 30 ist mittels mindestens eines Befestigungselements, insbesondere einer Befestigungsschraube 33, auf der Trägerplatte 32 befestigt. Die Befestigungsschraube 33 wird von der Unterseite der Trägerplatte 32 aus in die Lagereinheit 30 hineingeschraubt, um die auf der Oberseite der Lagereinheit 30 angeordneten Greifarme 2, 2a nicht zu behindern oder diese für die Befestigung der Lagereinheit 30 auf der Trägerplatte 32 nicht extra demontieren zu müssen. Des Weiteren ist die Spitze des zweiten Lagerbolzens 19 bei der Bohrung 10a erkennbar.

Figur 5 zeigt einen Querschnitt einer erfindungsgemäßen Greifeinrichtung 1, der im Wesentlichen bis auf das oberhalb der Greifarme 2, 2a angeordnete Betätigungselement 31 identisch zum Querschnitt aus Figur 4 ist. Dabei ist das Betätigungselement 31 derart dimensioniert, nicht mit der Greifarmoberseite 26, 26a, dem Flankenelement 28,28a eines der Greifarme 2, 2a oder mit der Spitze des Lagerbolzens 18, 19 in Berührung zu kommen. Des Weiteren sind die Unterseiten des in der Lagereinheit 30 eingesetzten Verlängerungselements 55 des Steuernockens 11, der Lagereinheit 30 und der Trägerplatte 32 vorzugsweise bündig zueinander.

In Figur 6 wird eine Draufsicht auf die Oberseite der Greifeinrichtung 1 aus Fig. 5 gezeigt, in der beide Greifarme 2, 2a montiert und in der Greifstellung sind. In dieser Stellung liegen die Achsen des Steuernockens 11 und der Befestigungselemente 14 und 14a des ersten und zweiten Greifarms 2, 2a im Wesentlichen auf einer gedachten Ebene. Diese Ebene ist äquidistant zu einer gedachten Ebene, die durch die Achsen der beiden Lagerbolzen 18 und 19 verläuft.

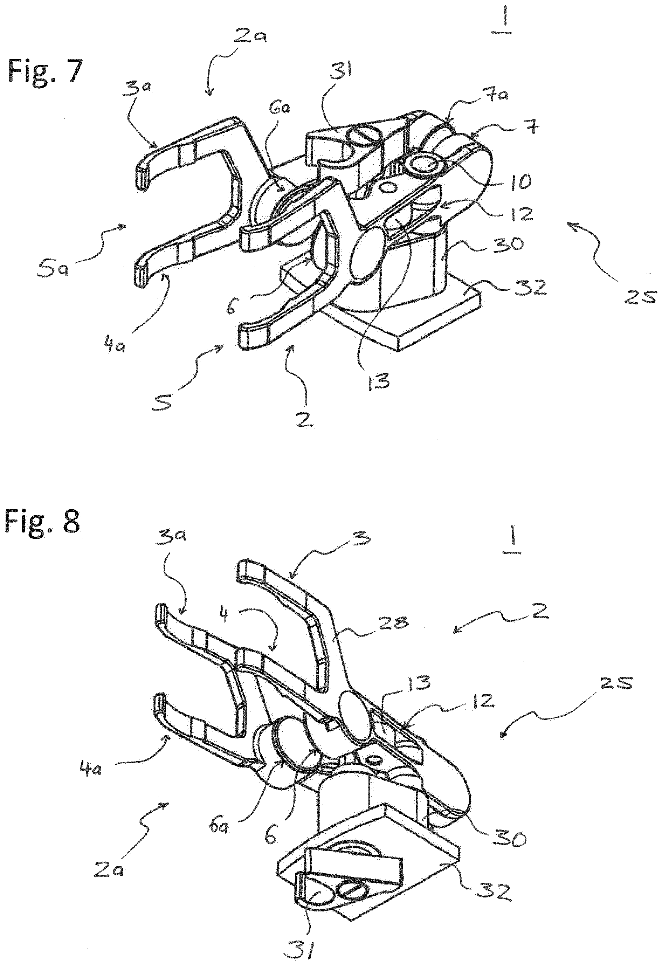

Figur 7 zeigt eine perspektivische Ansicht der Greifeinrichtung 1 aus Fig. 5, wobei die Abrollelemente 13, 13a der beiden Greifarme 2, 2a den Steuernocken 11 berühren. In einer Greifstellung, in der die Greifeinrichtung 1 einen Behälter hält, wird der minimale Abstand der beiden Greifarme 2, 2a durch den Behälter, und nicht durch den Steuernocken 11 bestimmt. Somit wird keine Kraft auf den Steuernocken 11 ausgeübt. Stattdessen werden die Anziehungskraft der Schließmittel 8 und 8a und die Abstoßungskraft der Schließmittel 9 und 9a zum Halten des Behälters verwendet. Des Weiteren sind die Greifarmaußenseite 25 des ersten Greifarms 2 und das darin ausgebildete Loch der dritten Aufnahme 12 zu sehen.

Figur 8 zeigt eine perspektivische Ansicht der Greifeinrichtung 1 aus Fig. 4, in der das Betätigungselement 31 unterhalb der Lagereinheit 30 angeordnet ist.

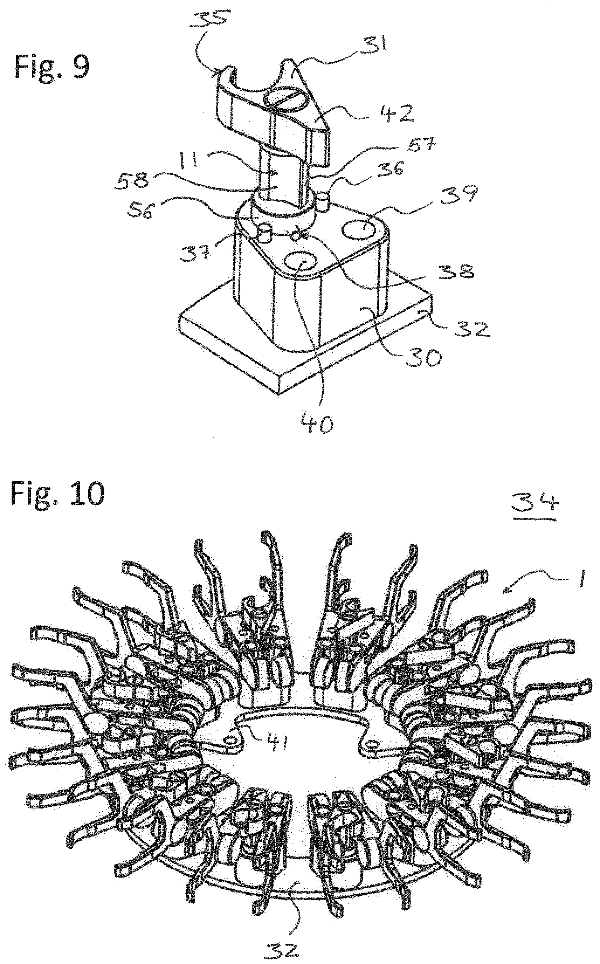

In Figur 9 wird eine perspektivische Ansicht der Lagereinheit 30 einer Greifeinrichtung 1 aus Fig. 5 mit einem eingesteckten Steuernocken 11 gezeigt. Die Oberseite und die Unterseite der Lagereinheit sind gleich groß und werden im Wesentlichen durch ein gleichschenkliges Dreieck mit abgerundeten Ecken gebildet. An der Basis des Dreiecks sind in der Nähe der Ecken die beiden Aufnahmen 39 und 40 für den zweiten und ersten Lagerbolzen 19 und 18 angeordnet. Die Aufnahmen 39, 40 sind zylindrische Sacklöcher und bilden mit den Lagerbolzen 19, 18 einen Formschluss, weshalb vorzugsweise keine Befestigungselemente wie z.B. Schrauben für die Lagerbolzen notwendig sind. Zwischen dem Steuernocken 11 und dem - hier nicht dargestellten - Verlängerungselement 55 ist ein Basiselement 56 in der Form einer dicken Scheibe angeordnet, das bereits in den Figuren 4 und 5 zu sehen ist. Das Basiselement 56 rotiert mit dem Steuernocken 11 und weist an seinem Außenrand einen Begrenzungsfortsatz 38 auf, der den Schwenkwinkel des Steuernockens 11 zwischen zwei Begrenzungsbolzen 36 und 37 begrenzt. Der Schwenkwinkel beträgt vorzugsweise 90° und erlaubt eine Drehung des Steuernockens im und gegen den Uhrzeigersinn, um die Greifeinrichtung 1 zuerst von einer Greifstellung in eine Öffnungsstellung und danach zurück in die Greifstellung zu führen. Die Begrenzungsbolzen 36, 37 können entweder in die Lagereinheit 30 einsetzbar oder Teil der Lagereinheit 30 sein. Das heißt, die Begrenzungsbolzen 36, 37 und die Lagereinheit 30 können einteilig sein. Der Steuernocken 11 weist eine erste und eine zweite Ablagefläche 57 und 58 auf. Die erste Ablagefläche 57 wirkt in der Öffnungsstellung mit den Abrollelementen 13, 13a zusammen und drückt die Greifarme 2, 2a auseinander. Des Weiteren ist die erste Ablagefläche 57 eine Ebene, die den Abrollelementen 13, 13a in der Öffnungsstellung eine stabile Positionierung bietet und ein Zurückfallen in die Greifstellung ohne die Betätigung des Betätigungselements 31 verhindert. Die zweite Ablagefläche 58 kann in der Greifstellung mit den Abrollelementen 13, 13a zusammenwirken, wenn gerade kein Behälter gehalten wird. Im Wesentlichen ist die zweite Ablagefläche 58 derart ausgebildet, ein Annähern und Schließen der Greifarme 2, 2a zuzulassen. Das Betätigungselement 31 weist auf der einen Seite der Drehachse einen Fanghaken 35 für ein - hier nicht dargestelltes - Aktivierungselement und auf der gegenüberliegenden Seite einen Fanghebel 42 für ein anderes - hier nicht dargestelltes - Aktivierungselement auf. Der Fanghebel 42 wirkt mit dem Aktivierungselement zusammen, um die Greifeinrichtung 1 mittels des Steuernockens 11 von der Greifstellung in die Öffnungsstellung zu bewegen.

Der Fanghaken 35 hingegen bewegt die Greifeinrichtung 1 von der Öffnungsstellung in die Greifstellung. Dabei dient ein Hebelteil des Fanghakens 35 zum Drehen des Steuernockens, während ein Hakenteil des Fanghakens 35 das Aktivierungselement einfängt und die Bewegung des Steuernockens 11 an die Bewegung des Aktivierungselements anpasst. Dadurch wird eine sprunghafte Bewegung des Steuernockens 11 und somit der Greifarme 2, 2a in die Greifstellung unterbunden und Beschädigungen des Behälters und der Greifarme beim Greifen vermieden.

Figur 10 zeigt eine perspektivische Ansicht der erfindungsgemäßen Transportvorrichtung 34, die eine Trägerplatte 32 in der Form eines Rings mit mehreren Befestigungsfortsätzen 41 aufweist. Auf der Trägerplatte 32 sind zwölf Greifeinrichtungen 1 angeordnet und befestigt, wobei die Betätigungselemente 31 oberhalb der Greifarme 2, 2a angeordnet sind.

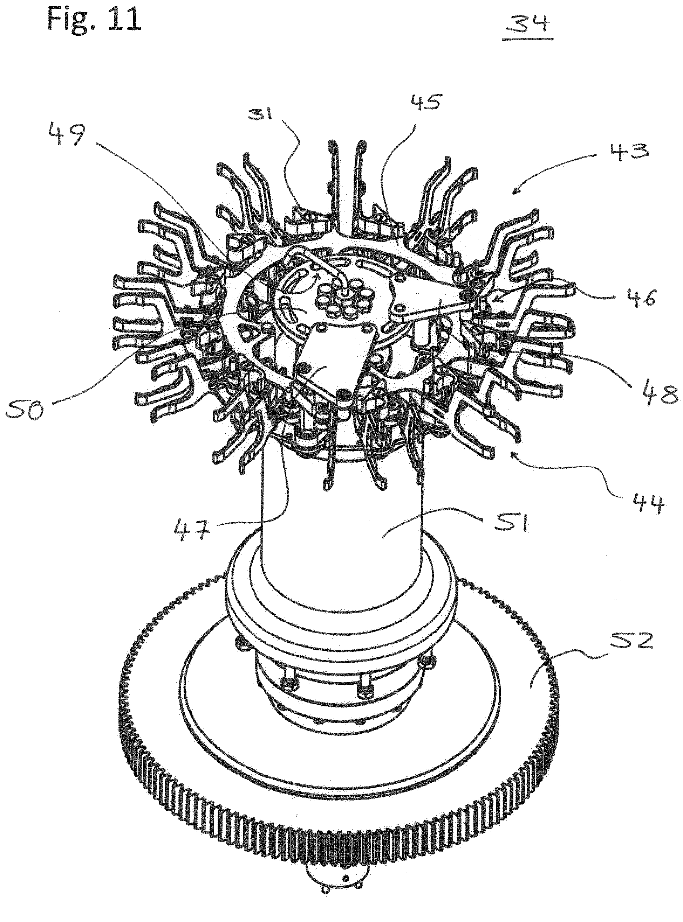

In der Figur 11 ist eine perspektivische Ansicht der erfindungsgemäßen Transportvorrichtung 34 gezeigt, die zusätzlich einen Standzylinder 51 und ein Antriebsrad 52 als Rotationselement aufweist. Der Standzylinder 51 ist nicht rotierbar und wird mittels Schrauben auf einem Untergrund befestigt. Das Antriebsrad 52 ist rotierbar und kann mit einem Zahnrad einer - hier nicht dargestellten - Antriebseinheit und/oder einer weiteren - hier nicht dargestellten - Transportvorrichtung zusammenwirken. Durch das Antriebsrad wird insbesondere die Trägerplatte 32 mit den Greifeinrichtungen 1 in Rotation versetzt. Zur Sicherung der Greifarme 2, 2a auf den Lagerbolzen 18, 19 ist ein Sicherungselement 45 in der Form eines Rings, der alle Greifeinrichtungen 1 abdeckt, auf den Lagerbolzen angeordnet und mittels mehrerer Verlängerungselemente mit den Befestigungsfortsätzen 41 der Trägerplatte 32 fest verbunden. Das Sicherungselement 45 weist zusätzlich Begrenzungselemente 46 auf, die im Wesentlichen wie die Begrenzungsbolzen 36, 37 die Drehung des Betätigungselements 31 begrenzen und die Betätigungselemente 31 in einer Position stoppen, um für eine sichere und fehlerfreie Betätigung der Betätigungselemente 31 durch die Aktivierungselemente 47, 48 zu sorgen.

Es wird darauf hingewiesen, dass die Transportvorrichtung 34 in weiteren Ausführungsformen entweder die Begrenzungsbolzen 36, 37 oder die externen Begrenzungselemente 46 aufweisen kann. In der Mitte der Transportvorrichtung 34, d.h. an seiner Drehachse, befindet sich ein nicht rotierbares Befestigungselement 50 in der Form eines Kranzes bzw. einer Scheibe mit länglichen Bohrungen. In diesen Bohrungen werden mittels Schrauben das erste und zweite Aktivierungselement 47 und 48 befestigt. Das erste Aktivierungselement 47 weißt eine Platte auf, die an einem Ende mit dem Kranz 50 befestigt wird und an ihrem anderen Ende zwei Stangen bzw. zylinderförmige Körper aufweist. In dieser Figur rotiert die Transportvorrichtung gegen den Uhrzeigersinn, wodurch die erste Stange des ersten Aktivierungselements 47 zunächst mit dem Fanghebel 42 zusammenwirkt, um sicherzustellen, dass die Greifeinrichtung in der Öffnungsstellung ist. Danach folgt die zweite Stange des ersten Aktivierungselements 47, die mit dem Fanghaken 35 zusammenwirkt und die Greifeinrichtung in die Greifstellung versetzt. Das zweite Aktivierungselement 48 weißt ebenfalls eine Platte auf, die jedoch im Vergleich zur Platte des ersten Aktivierungselements 47 dreiecksförmig ausgebildet ist und nur eine Stange aufweist. Diese Stange wirkt mit dem Fanghebel 42 zusammen und bringt die Greifeinrichtung in die Öffnungsstellung. Des Weiteren erstreckt sich aus dem Kranz 50 eine Reinigungsmittelzufuhr 49, die auf eine Greifeinrichtung 1 gerichtet ist und zum Aufbringen von Reinigungsmittel dient.

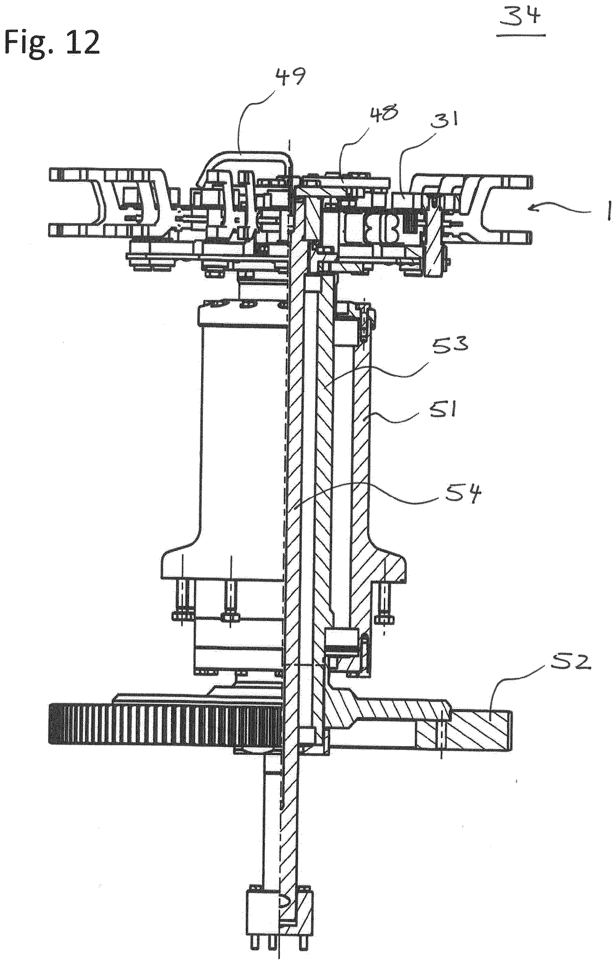

Figur 12 zeigt eine Seitenansicht mit einem partiellen Querschnitt der erfindungsgemäßen Transportvorrichtung mit dem Antriebsrad 52 als Rotationselement aus Fig. 11. Der Standzylinder 51 weist zusätzlich einen ersten rotierbaren Innenzylinder 53 und einen zweiten nicht rotierbaren Innenzylinder 53 auf, wobei der Standzylinder 51 im Wesentlichen zum Schutz vor beweglichen Elementen wie dem ersten Innenzylinder 53 sowie dem Tragen, Positionieren und Stabilisieren des ersten und zweiten Innenzylinders 53, 54 dient. Alle drei Zylinder 51, 53, 54, die im Wesentlichen einem Hohlzylinder entsprechen, sind mittels zwischen den Zylindern angeordneten Kugellagern miteinander verbunden, um die Rotationsfähigkeit des ersten Innenzylinders 53 zu ermöglichen. Der erste Innenzylinder 53 ist mit der Trägerplatte 32 sowie mit dem Antriebsrad 52 fest verbunden und dient als Welle zur Übertragung der Rotation des Antriebsrads auf die Trägerplatte. Auf dem zweiten Innenzylinder 54 ist der Kranz 50 befestigt und kann auch eine Leitung, vorzugsweise entlang seiner Achse, für ein Reinigungsmittel in Form von Flüssigkeit oder Luft für die Reinigungsmittelzufuhr 49 umfassen.

### Bezugszeichen

- 1: Greifeinrichtung
- 2: Greifarm
- 3: Erster Greiffinger
- 4: Zweiter Greiffinger
- 5: Greifabschnitt
- 6: Erste Aufnahme (erstes Sackloch)
- 7: Zweite Aufnahme (zweites Sackloch)
- 8: Erstes Schließmittel (erster Magnet)
- 9: Zweites Schließmittel (zweiter Magnet)
- 10: Bohrung
- 11: Steuernocken
- 12: Dritte Aufnahme (für Abrollelement)
- 13: Abrollelement (Abrollreifen)
- 14: Befestigungselement des Abrollelements (Welle)
- 15: Befestigungsaufnahme (Bohrung für Welle)
- 16: Verzahnungsabschnitt
- 17: Zahn des Verzahnungsabschnitts
- 18: Erster Lagerbolzen
- 19: Zweiter Lagerbolzen
- 20: Erste Greiffläche des ersten Greiffingers
- 21: Zweite Greiffläche des ersten Greiffingers
- 22: Erste Greiffläche des zweiten Greiffingers
- 23: Zweite Greiffläche des zweiten Greiffingers
- 24: Greifarminnenseite
- 25: Greifarmaußenseite
- 26: Greifarmoberseite
- 27: Greifarmunterseite
- 28: Erstes Flankenelement
- 29: Zweites Flankenelement
- 30: Lagereinheit (Lagerblock)
- 31: Betätigungselement
- 32: Trägerplatte
- 33: Befestigungsschraube
- 34: Transportvorrichtung (Transportstern)
- 35: Fanghaken (für ein Aktivierungselement)
- 36: Erster Begrenzungsbolzen
- 37: Zweiter Begrenzungsbolzen
- 38: Begrenzungsfortsatz
- 39: Aufnahme für zweiten Lagerbolzen
- 40: Aufnahme für ersten Lagerbolzen
- 41: Befestigungsfortsatz
- 42: Fanghebel (für ein Aktivierungselement)
- 43: Greifeinrichtung in Öffnungsstellung
- 44: Greifeinrichtung in Greifstellung
- 45: Sicherungselement (Sicherungsring)
- 46: Begrenzungselement (externer Begrenzungsbolzen)
- 47: Erstes Aktivierungselement
- 48: Zweites Aktivierungselement
- 49: Reinigungsmittelzufuhr
- 50: Befestigungskranz (für Aktivierungselemente)
- 51: Standzylinder
- 52: Antriebsrad
- 53: Rotierbarer Innenzylinder (für Transportstern)
- 54: Nicht rotierbarer Innenzylinder (für Befestigungskranz)
- 55: Verlängerungselement (des Steuernockens)
- 56: Basiselement (des Steuernockens)
- 57: Erste Ablagefläche (für Öffnungsstellung)
- 58: Zweite Ablagefläche (für Greifstellung)
- #a: Alle mit einem 'a' endende Bezugszeichen beziehen sich auf die Merkmale des zum 1. Greifarm gegengleich ausgebildeten 2. Greifarms

## Patentansprüche

1. Greifeinrichtung (1) zum Greifen, Halten und Führen von insbesondere flaschenartigen Behältern, mit
- wenigstens einem Greifarmpaar aus einem ersten Greifarm (2) sowie einem gegengleich ausgebildeten, zweiten Greifarm (2a), die jeweils einen Greifabschnitt (5) aufweisen,
- wenigstens einer Lagereinheit (30) zum Lagern des Greifarmpaars, wobei die Lagereinheit mindestens einen ersten und zweiten Lagerbolzen (18; 19) zum schwenkbaren Befestigen des ersten und zweiten Greifarms (2; 2a) aufweist, und mit
- wenigstens einem ersten und einem zweiten Schließmittel (8; 9) zum Bewegen der Greifabschnitte (5) des Greifarmpaars von einer Öffnungsstellung in eine Greifstellung, wobei das erste und zweite Schließmittel (8; 9) jeweils in dem ersten und zweiten Greifarm (2; 2a) angeordnet sind, wobei der erste und zweite Greifarm (2; 2a) des Greifarmpaars jeweils aufweist:
- eine Bohrung (10) zur Lagerung einer der Lagerbolzen (18; 19),
- eine erste und zweite Aufnahme (6; 7) für das erste und zweite Schließmittel (8; 9), die erste Aufnahme (6) als wenigstens ein erstes Sackloch zwischen der Bohrung (10) und dem Greifabschnitt (5) und die zweite Aufnahme (7) als wenigstens ein zweites Sackloch zwischen Bohrung (10) und dem Greifabschnitt gegenüberliegenden Ende des Greifarms (2) ausgebildet ist,
- das erste und das zweite Schließmittel (8; 9), die jeweils als ein Magnet eines sich anziehenden bzw. abstoßenden Magnetpaares ausgebildet sind,
**dadurch gekennzeichnet, dass**
die Greifeinrichtung wenigstens einen drehbar gelagerten Steuernocken (11) zum Bewegen von Greifabschnitten (5) des Greifarmpaars von einer Greifstellung in eine Öffnungsstellung,
der Greifabschnitt (5) des ersten und zweiten Greifarms (2; 2a) mindestens zwei Greiffinger (3; 4) aufweist, die derart beschaffen und ausgebildet sind, in der Greifstellung zum Halten eines Behälters zu dienen, wobei die Ränder der Sacklöcher (6, 7) jeweils eine Ebene bilden, die nicht parallel, sondern in einem bestimmten Winkel zueinander liegen.

2. Greifeinrichtung (1) nach Anspruch 1,
**dadurch gekennzeichnet, dass**
der erste und zweite Greifarm (2; 2a) des Greifarmpaars auf den ersten und zweiten Lagerbolzen (18; 19) aufsteckbar sind.

3. Greifeinrichtung (1) nach Anspruch 1 oder 2,
**dadurch gekennzeichnet, dass**
zwischen dem ersten und zweiten Greifarm (2; 2a) des Greifarmpaars der wenigstens eine Steuernocken (11) angeordnet und/oder in die Lagereinheit (30) einsteckbar ist.

4. Greifeinrichtung (1) nach einem der Ansprüche 1 bis 3,
**dadurch gekennzeichnet, dass**
der wenigstens eine Steuernocken (11) ein Betätigungselement (31) aufweist, das im Lagerzustand des Steuernockens oberhalb des Greifarmpaars oder unterhalb der Lagereinheit angeordnet ist.

5. Greifeinrichtung (1) nach einem der Ansprüche 1 bis 4,
**dadurch gekennzeichnet, dass**
dass wenigstens zwei Greiffinger (3; 4) des Greifabschnitts (5) parallel und/oder äquidistant zueinander angeordnet sind.

6. Greifeinrichtung (1) nach einem der Ansprüche 1 bis 5,
**dadurch gekennzeichnet, dass**
der Greifarm (2) einstückig aus Kunststoff, insbesondere aus faserverstärktem Polyetheretherketon, gefertigt ist.

7. Greifeinrichtung (1) nach einem der Ansprüche 1 bis 6,
**dadurch gekennzeichnet, dass**
der Greifarm (2) zwischen der Bohrung (10) und der ersten Aufnahme eine an einer Greifarminnenseite angeordnete dritte Aufnahme (12) zum rotierbaren Befestigen eines Abrollelements (13) aufweist, das mit dem Steuernocken (11) beim Überführen von der Greifstellung in die Öffnungsstellung zusammenwirkt.

8. Greifeinrichtung (1) nach einem der Ansprüche 1 bis 7,
**dadurch gekennzeichnet, dass**
der Greifarm (2) wenigstens einen Verzahnungsabschnitt (16) mit zumindest segmentweise koaxial um die wenigstens eine Bohrung (10) an der Greifarminnenseite angeordneten Zähnen (17) zum synchronen Schwenken des Greifarms (2) mit einem komplementär ausgebildeten Greifarm (2a) der Greifeinrichtung (1) aufweist.

9. Transportvorrichtung (34) zum Transportieren von Behältern mit einem oder mehreren Greifeinrichtungen (1) nach einem der Ansprüche 1 bis 8.

10. Transportvorrichtung (34) nach Anspruch 9,
**gekennzeichnet durch**
eine ringförmige Trägerplatte (32), die derart ausgebildet ist, dass ein Positionieren und Befestigen der einen oder mehreren Greifeinrichtungen (1) auf der Trägerplatte möglich ist.

11. Transportvorrichtung (34) nach Anspruch 9 oder 10,
**gekennzeichnet durch**
ein Sicherungselement (45) zum Sichern des ersten und zweiten Greifarms (2; 2a) auf den ersten und zweiten Lagerbolzen (18; 19).

## Claims

1. A gripping device (1) for gripping, holding and guiding particularly bottle-like containers, having
- at least one gripper arm pair of a first gripper arm (2) as well as a second gripper arm (2a) of mirror-inverted configuration, each comprising a grip section (5),
- at least one bearing unit (30) for supporting the gripper arm pair, wherein the bearing unit comprises at least one first and second bearing bolt (18; 19) for the pivotable fixing of the first and second gripper arm (2; 2a), and having
- at least one first and one second closure means (8; 9) for moving the grip sections (5) of the gripper arm pair from an open position into a gripping position, wherein the first and second closure means (8; 9) are respectively arranged in the first and second gripper arm (2; 2a), wherein each respective first and second gripper arm (2; 2a) of the gripper arm pair exhibits:
- a bore (10) for supporting one of the bearing bolts (18; 19),
- a first and second mounting (6; 7) for the first and second closure means (8; 9), the first mounting (6) configured at least as a first blind hole between the bore (10) and the grip section (5) and the second mounting (7) as at least a second blind hole between the bore (10) and the end of the gripper arm (2) opposite the grip section,
- the first and the second closure means (8; 9), each formed as a magnet of an attracting / repelling magnet pair,
**characterized in that**
the gripping device comprises at least one rotatably mounted control cam (11) for moving a grip section (5) of the gripper arm pair from a gripping position into an open position,
the grip section (5) of the first and second gripper arm (2; 2a) comprises at least two gripper fingers (3; 4) which are constructed and designed to serve in holding a container when in the gripping position,
wherein the respective edges of the blind holes (6; 7) form a plane which is not parallel but rather set at a certain angle to one another.

2. The gripping device (100) according to claim 1,
**characterized in that**
the first and second gripper arm (2; 2a) of the gripper arm pair can be fit onto the first and second bearing bolt (18; 19).

3. The gripping device (100) according to claim 1 or 2,
**characterized in that**
the at least one control cam (11) is arranged between the first and second gripper arm (2; 2a) of the gripper arm pair and/or can be inserted into the bearing unit (30).

4. The gripping device (100) according to one of claims 1 to 3,
**characterized in that**
the at least one control cam (11) comprises an actuating element (31) which is arranged above the gripper arm pair or below the bearing unit in the bearing state of the control cam.

5. The gripping device (100) according to one of claims 1 to 4,
**characterized in that**
at least two gripping fingers (3; 4) of the grip section (5) are arranged parallel to and/or equidistant from one another.

6. The gripping device (100) according to one of claims 1 to 5,
**characterized in that**
the gripper arm (2) is formed integrally of plastic, in particular fiber-reinforced polyetheretherketone.

7. The gripping device (100) according to one of claims 1 to 6,
**characterized in that**
the gripper arm (2) comprises a third mounting (12) arranged between the bore (10) and the first mounting on an inner side of the gripper arm for rotatably fixing a rolling element (13) which interacts with the control cam (11) during the conversion from the gripping position to the open position.

8. The gripping device (100) according to one of claims 1 to 7,
**characterized in that**
the gripper arm (2) comprises at least one toothed section (16) having at least segmentally coaxial teeth (17) arranged about the at least one bore (10) on the inner side of the gripper arm for synchronously pivoting the gripper arm (2) with a complementarily-shaped gripper arm (2a) of the gripping device (1).

9. A transport device (34) for transporting containers by means of one or more gripping devices (1) according to one of claims 1 to 8.

10. The transport device (34) according to claim 9,
**characterized by**
an annular support plate (32) configured so as to enable a positioning and fixing of the one or more gripping devices (1) on the support plate.

11. The transport device (34) according to claim 9 or 10,
**characterized by**
a securing element (45) for securing the first and second gripper arm (2; 2a) to the first and second bearing bolt (18; 19).

## Revendications

1. Dispositif de préhension (1) pour saisir, retenir et guider des récipients en particulier en forme de bouteilles, comportant
- au moins une paire de bras de préhension constituée par un premier bras de préhension (2) ainsi que par un second bras de préhension (2a) de réalisation conjuguée, qui comprennent chacun une portion de préhension (5),
- au moins une unité de montage (30) pour monter la paire de bras de préhension, l'unité de montage comprenant au moins un premier et un second goujon de montage (18 ; 19) pour fixer en pivotement le premier et le second bras de préhension (2 ; 2a), et comportant
- au moins un premier et un second moyen de fermeture (8 ; 9) pour déplacer les portions de préhension (5) de la paire de bras de préhension depuis une position d'ouverture jusque dans une position de préhension, le premier et le second moyen de fermeture (8 ; 9) étant agencés respectivement dans le premier et dans le second bras de préhension (2 ; 2a),
le premier et le second bras de préhension (2 ; 2a) de la paire de bras de préhension comprenant chacun :
- un perçage (10) pour monter l'un des goujons de montage (18 ; 19),
- un premier et un second logement (6 ; 7) pour loger le premier et le second moyen de fermeture (8 ; 9), le premier logement (6) étant réalisé sous la forme d'au moins un premier trou borgne entre le perçage (10) et la portion de préhension (5) et le second logement (7) étant réalisé sous la forme d'au moins un second trou borgne entre le perçage (10) et l'extrémité du bras de préhension (2) opposée à la portion de préhension,
- le premier et le second moyen de fermeture (8 ; 9) qui sont réalisés chacun sous la forme d'un aimant d'une paire d'aimants qui s'attirent ou se repoussent,
**caractérisé en ce que**
le dispositif de préhension comprend au moins une came de commande (11) montée mobile en rotation pour déplacer les portions de préhension (5) de la paire de bras de préhension depuis une position de préhension jusque dans une position d'ouverture,
la portion de préhension (5) du premier et du second bras de préhension (2 ; 2a) comprend au moins deux doigts de préhension (3 ; 4) qui sont constitués et réalisés de manière à servir à retenir un récipient dans la position de préhension,
les bords des trous borgnes (6, 7) formant chacun un plan, lesdits plans n'étant pas parallèles mais définissant un angle déterminé l'un par rapport à l'autre.

2. Dispositif de préhension (1) selon la revendication 1,
**caractérisé en ce que**
le premier et le second bras de préhension (2 ; 2a) de la paire de bras de préhension sont enfichables sur le premier et sur le second goujon de montage (18 ; 19).

3. Dispositif de préhension (1) selon la revendication 1 ou 2,
**caractérisé en ce que**
au moins une came de commande (11) est agencée entre le premier et le second bras de préhension (2 ; 2a) de la paire de bras de préhension et/ou est enfichable dans l'unité de montage (30).

4. Dispositif de préhension (1) selon l'une des revendications 1 à 3,
**caractérisé en ce que**
ladite au moins une came de commande (11) comprend un élément d'actionnement (31) qui, dans l'état de montage de la came de commande, est agencé au-dessus de la paire de bras de préhension ou au-dessous de l'unité de montage.

5. Dispositif de préhension (1) selon l'une des revendications 1 à 4,
**caractérisé en ce que**
au moins deux doigts de préhension (3 ; 4) de la portion de préhension (5) sont agencés parallèlement et/ou de façon équidistante l'un par rapport à l'autre.

6. Dispositif de préhension (1) selon l'une des revendications 1 à 5,
**caractérisé en ce que**
le bras de préhension (2) est fabriqué d'un seul tenant en matière plastique, en particulier en polyétheréthercétone.

7. Dispositif de préhension (1) selon l'une des revendications 1 à 6,
**caractérisé en ce que**
entre le perçage (10) et le premier logement, le bras de préhension (2) comprend un troisième logement (12) disposé sur le côté intérieur du bras de préhension et destiné à la fixation rotative d'un élément de déroulement (13) qui coopère avec la came de commande (11) lors du transfert depuis la position de préhension jusque dans la position d'ouverture.

8. Dispositif de préhension (1) selon l'une des revendications 1 à 7,
**caractérisé en ce que**
le bras de préhension (2) comprend au moins une portion à denture (16) comportant des dents (17) disposées au moins par secteur coaxialement autour dudit au moins un perçage (10) sur le côté intérieur du bras de préhension et destinées au pivotement synchrone du bras de préhension (2) avec un bras de préhension (2a) réalisé de façon complémentaire du dispositif de préhension (1).

9. Dispositif de transport (34) pour transporter des récipients au moyen d'un ou plusieurs dispositifs de préhension (1) selon l'une des revendications 1 à 8.

10. Dispositif de transport (34) selon la revendication 9,
**caractérisé par**
une plaque de support (32) en forme annulaire qui est réalisée de manière à permettre un positionnement et une fixation de l'un ou des plusieurs dispositifs de préhension (1) sur la plaque de support.

11. Dispositif de transport (34) selon la revendication 9 ou 10,
**caractérisé par**
un élément de blocage (45) pour bloquer le premier et le second bras de préhension (2 ; 2a) sur le premier et sur le second goujon de montage (18 ; 19).
